## Europäisches Patentamt
## European Patent Office
## Office européen des brevets

(19)

(11) Veröffentlichungsnummer: **0 050 145**
**B1**

(12)

# EUROPÄISCHE PATENTSCHRIFT

(45) Veröffentlichungstag der Patentschrift:
19.03.86

(51) Int. Cl.⁴: **B 60 G 11/00**

(21) Anmeldenummer: **81901160.2**

(22) Anmeldetag: **24.04.81**

(86) Internationale Anmeldenummer:
**PCT/HU 81/00016**

(87) Internationale Veröffentlichungsnummer:
**WO 81/02999 (29.10.81 Gazette 81/25)**

(54) **RADAUFHÄNGUNG.**

(30) Priorität: **25.04.80 HU 102780**

(43) Veröffentlichungstag der Anmeldung:
**28.04.82 Patentblatt 82/17**

(45) Bekanntmachung des Hinweises auf die Patenterteilung:
**19.03.86 Patentblatt 86/12**

(84) Benannte Vertragsstaaten:
**FR**

(56) Entgegenhaltungen:
**BE - A - 444 162
CH - A - 354 343
DE - A - 1 555 234
DE - B - 1 090 979
DE - C - 952 055
DE - C - 1 243 030
DE - C - 1 630 529
FR - A - 1 232 152
SU - A - 492 403
US - A - 2 117 588**

(73) Patentinhaber: **Ikarus Karosszéria és Járműgyar,
Matyásföld Margit Utca 2, Budapest XVI (HU)**

(72) Erfinder: **KARASZY, György, Kökörcsin u. 2,
H-1113 Budapest (HU)**
Erfinder: **BOTA, Jenö, Városmajor u. 64,
H-1122 Budapest (HU)**
Erfinder: **MADI, Jenö, Pilóta u. 1, H-1165 Budapest (HU)**
Erfinder: **NEMETH, József, Nefelejts u. 14,
H-1039 Budapest (HU)**

(74) Vertreter: **Martin, Jean-Jacques et al, Cabinet
REGIMBEAU 26, Avenue Kléber, F-75116 Paris (FR)**

**Beschreibung**

Die Erfindung betrifft eine Radaufhängung für gelenkte starre Achsen von Kraftfahrzeugen, insbesondere Autobussen.

Wie bekannt sind die Räder von Federn "aufgehängt". Eine an die Radaufhängung gestellte grundlegende Anforderung besteht darin daß die Rotationsebene der Räder auch durch das Einfedern nicht verstellt werden kann. Bei den Autobussen meldet sich in letzter Zeit immer stärker der Anspruch, daß der Fußboden des Fahrgastraumes so niedrig wie möglich eingebaut wird. Dem aber steht im Wege, daß es bisher noch nicht gelungen ist, das achsenlenkende Gestänge, die Lenkstange, den Stoßdämpfer, die Federelemente und die Federhalterungen außerhalb des Fahrgastraumes so anzubringen, daß damit die gewünschte niedrige Anordnung des Fahrraumbodens ermöglicht wäre.

Bekannt ist eine solche Radaufhängung bei gelenkten starren Achsen, bei welcher das Federelement, beispielsweise eine Luftfeder, direkt an der Achse befästigt ist. Der mit der Achse starr verbundene Bolzen ist in einem Achsenstumpf der Radnabe verdrehbar gelagert. Diese Anordnung hat aber den Mangel, daß - insbesodere bei Kraftfahrzeugen von großem Achsendruck, z.B. bei Autobussen - die Federbasis, d.h. der abstand der Federelemente von einander sehr klein ist, was wiederum zu einer ungenügenden Seitenstabilität, und relativ hoher Fußbodenanordnung führt.

Um die obigen Mängel zu beseitigen, wurden auch solche Vorschläge gemacht, bei welchen — um die Seitenstabilität zu verbessern — das Federelement, z.B. eine Luftfeder, an der starren Achse, über eine entsprechend ausgebildete Federelement-Halterung, befestigt ist. Obzwar nun hierdurch eine größere Federbasis, und damit auch eine günstigere Seitenstabilität geschaffen wird, so nimmt doch die Halterung des Federelements, wegen seiner robusten Ausgestaltung viel Platz vom Fahrgastraum des Autobusses in Anspruch und verhindert damit dessen günstigere Ausgestaltung. Eine solche Radaufhängung wird z.B. bei den, im Handelsverkehr unter den Typus-Bezeichnungen "IKARUS-260" und "DAIMLER-BENZ" bekannten Autobussen, angewendet.

Bei der bekannten unabhängigen Radaufhängung, insbesondere bei den Kraftfahrzeugen mit großem Achsendruck, z.B. bei den Autobussen oder bei Spezialfahrzeugen für große Lasten ist - identisch der Lösung bei der starren Achse - am Achsenstumpf der Radnabe über einen Bolzen ein Zwischenstück verdrehbar angeschlossen. Der obere und untere Querlenker des Zwischenstückes sind in der Vertikalebene verdrehbar angeordnet, ferner ist am oberen Ende des Zwischenstückes das Federelement fixiert. Bei dieser Lösung sind Zwischenstück und Bolzen fest mit einander verbunden. Ein Nachteil ist, daß das Zwischenstück ein kompliziert konstruiertes, robust gebautes, einen großen Aufwand erforderndes Maschinenteil ist, das eine Fortentwicklung des Fahrgastraumes verhindert.

Der Stand der Technik kann ferner durch US-A-2 117 588 und DE-C-952 055 geschildert werden. US-A-2 117 588 beschreibt eine Lösung die nur bei unabhängigen Radaufhängungen anwendbar ist. DE-C-952 055 bezieht sich auf eine Einzelradaufhängung für Kraftfahrzeuge, bei welcher die gelenkten Räder durch ein in Fahrtrichtung schwingendes Lenkerparallellogramm geführt und durch Schraubenfedern abgefedert sind.

Ziel der Erfindung ist: das Schaffen einer solchen Lösung, mittels welcher hauptsächlich bei Kraftfahrzeugen mit großem Achsendruck, z.B. bei Autobussen die Radaufhängung vereinfacht werden kann, und welche eine günstigere Ausgestaltung des Fahrgastraumes von Autobussen ermöglicht.

Die gestellte Aufgabe wurde gemäß der Erfindung gelöst durch Fortentwicklung einer Radaufhängung für gelenkte starre Achsen von Kraftfahrzeugen, insbesondere Autobussen, bei welcher eine starre Achse mit einem, in einem Achsenstumpf einer Radnabe verschwenkbar gelagerten Bolzen starr verbunden, ferner mit einer Federhalterung versehen ist, bei welcher der Bolzen mit der Federhalterung starr verbunden ist.

Die obige Ausgestaltung ermöglicht zunächst, z.B. bei Autobussem das Schaffen eines breiteren Laufganges und eines tiefer gelegten Fußbodens im Fahrgastraum, ferner eine wesentlich einfachere Konstruktion des Fahrgestelles, denn bei der starren Achse kann anstatt der robusten Federelement-Halterung bzw. bei der unabhängigen radaufhängung anstatt des kompliziert gestalteten Zwischenstückes, eine wesentlich einfachere und weniger aufwendige Federhalterung bzw. Zwischenstück angewendet werden.

Zweckmäßig ist eine solche Ausführungsform gemäß der Erfindung, bei welcher der Bolzen und die Federhalterung aus einem einzigen Stück z.B. durch Schmieden gefertigt sind, wodurch dann eine noch einfachere und billigere Herstellung ermöglicht ist.

Die Erfindung soll nun anhand der beigefügten Zeichnungen in ihren Einzelheiten näher erläutert werden, wobei in diesen Zeichnungen zwei der möglichen Ausführungsbeispiele dargestellt sind. Es zeigt:

Figur 1 Ausführungsbeispiel der erfindungsgemäßen Randaufhängung bei gelenkter starrer Achse. Seitenansicht; teils im Schnitt.

Figur 2 Variante eines Details aus Figur 1 Längsschnitt.

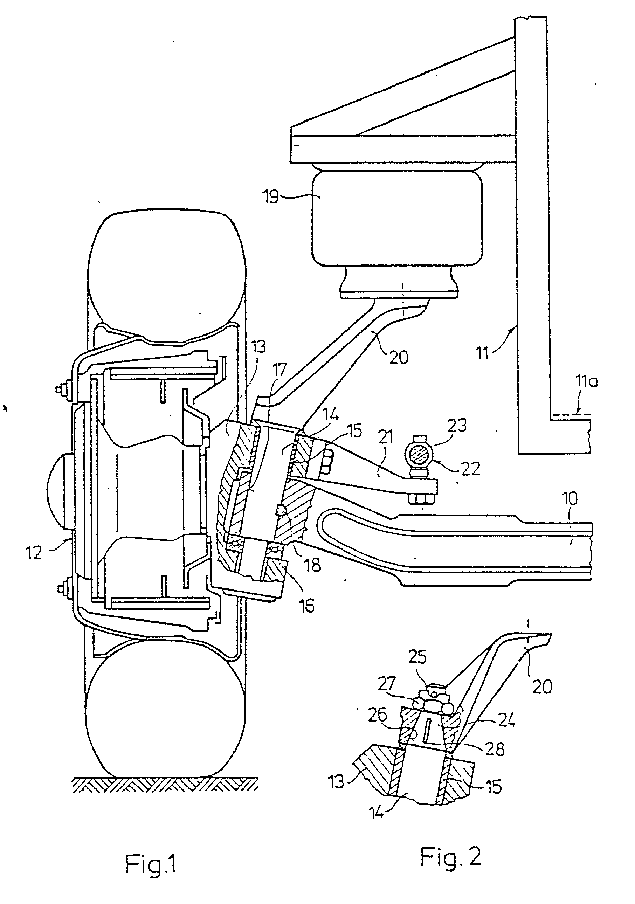

Wie aus Figur 1 ersichtlich ist, ist eine starre gelenkte Achse mit 10, ein Fahrgestell mit 11 und eine mit Gummireifen und Bremse versehene komplette Radnabe mit Bezugsnummer 12 bezeichnet. Die Radnabe 12 hat einen an sich bekannten, gabelartig ausgestalteten Achsenstumpf 13, in welchem ein Bolzen 14 in bekannter Weise - oben in einer Buchse 15 unten aber in einem axialen Rollenlager 16 - verschwenkbar gelagert ist. Die Enden der Achse 10 sind mit Bohrungen 17 versehen, durch welche der Bolzen 14 hindurchgeführt ist. Die Achse 10 ist mit dem Bolzen 14 auf an sich bekannte Weise starr verbunden. Diese Verbindung ist im vorliegenden Falle durch einen Fixierzapfen 18 gelöst. Dieser Fixierzapfen 18 verhindert eine axiale Verschiebung und Verdrehung des Bolzens 14 gegenüber der Achse 10.

Das Fahrgestell 11 sitzt in an sich bekannter Weise auf Federelementen; im vorliegenden Falle auf Luftfedern 19. Der untere Teil der Luftfeder 19 ist mit einer Federelement-Halterung 20 verbunden.

Erfindungsgemäß ist mit dem Bolzen 14 die Federelement-Halterung 20 starr verbunden. In Figur 1 ist der Bolzen 14 und die Federelement-Halterung 20 durch Schmieden als ein einziges Stück gefertigt.

An dem Achsenstumpf 13 ist in an sich bekannter Weise eine Konsole 21 befestigt, an welcher dann über ein Kugelgelenk 22 die Lenkstange 23 angreift. Mit Hilfe der Lenkstange 23 kann die Radnabe 12 und den Bolzen 14 verschwenkt werden. In Figur 1 wurde die Fußbodenhöhe mit Bezugsnummer 11a bezeichnet. Natürlich kann die starre Verbindung zwischen dem Bolzen 14 und der Federhalterung 20 auch anders ausgestaltet werden, z.B. nach dem detail in Figur 2. Hier ist der Bolzen 14 mit einem, nach oben Verjüngten Konus 24 Versehen, der in einem Gewindestab 25 endet. Die Federelement-Halterung 20 ist zur Aufnahme der Konus 24 mit einer konischen Bohrung 26 versehen. Ferner ist hier für eine starre Verbindung zwischen dem Bolzen 14 und der Federhalterung 20 durch eine Schraubemutter 27 und einen Riegel 28 gelöst. Diese Ausführungsart kann bei kleineren Fertigungsserien von Vorteil sein.

**Patentansprüche**

1. Radaufhängung für gelenkte starre Achsen von Kraftfahrzeugen, insbesondere Autobussen, bei welcher eine starre Achse (10) mit einem, in einem Achsenstumpf (13) einer Radnabe (12) verschwenkbar gelagerten Bolzen (14) starr verbunden, ferner mit einer Federhalterung (20) versehen ist, dadurch gekennzeichnet, daß der Bolzen (14) mit der Federhalterung (20) starr verbunden ist.

2. Radaufhängung nach Anspruch 1, dadurch gekennzeichnet, daß der Bolzen (14) und die Federhalterung (20) als ein einziges Werkstück hergestellt sind.

**Claims**

1. Wheel suspension for articulated rigid axles of motor vehicles, specially for buses, in which a rigid axle (10) is rigidly connected with a spindle (14) mounted for rotation in an axle stump (13) of a wheel hub (12) and furthermore provided with a spring support (20), characterized in that the spindle (14) is rigidly connected with the spring support (20).

2. Wheel suspension according to claim 1, characterized in that the spindle (14) and the spring support (20) are a single piece manufacture.

**Revendications**

1. Suspension de roue des essieux rigides désarticulés de véhicules automobiles, autobus notamment, selon laquelle un essieu rigide (10) est relié de façon rigide avec un tourillon (14) monté à rotation dans un bout d'axe (13) d'un moyeu de roue (12), et est en outre muni d'un support (20) de ressort, caractérisée par le fait que le tourillon (14) est relié rigidement au support (20) de ressort.

2. Suspension de roue selon la revendication 1, caractérisée par le fait que le tourillon (14) et le support (20) de ressort sont réalisés en une seule pièce.

1/1

Fig.1

Fig. 2